# EUROPEAN PATENT SPECIFICATION

(11) **EP 3 670 051 B1**
(45) Date of publication and mention of the grant of the patent: **05.07.2023**
(21) Application number: 19216223.8
(22) Date of filing: 13.12.2019
(51) Int. Cl.: B23F 9/10, B23F 17/00, B23P 15/14

(54) **A MACHINE TOOL FOR MANUFACTURING TOOTHED GEARS AND COMPONENTS PROVIDED WITH EXTERNAL TOOTHING AND A GROOVED INTERNAL PROFILE**
WERKZEUGMASCHINE ZUM HERSTELLEN VON ZAHNRÄDERN UND KOMPONENTEN MIT EINEM GENUTETEN INNENPROFIL
MACHINE-OUTIL POUR LA FABRICATION D'ENGRENAGES ET COMPOSANTS AVEC UN PROFIL INTERNE RAINURE

(30) Priority: 17.12.2018 IT 201800011170
(43) Date of publication of application: 24.06.2020
(73) Proprietor: hGears Holding GmbH, 78713 Schramberg (DE)
(72) Inventor: Schondelmeier, Peter, 78730 Lauterbach (DE)
(74) Representative: Locas, Davide

(56) References cited:
- DE-A1-102012 012 559
- DE-A1-102013 008 709
- DE-A1-102015 120 556
- FR-A1- 2 722 441

## Description

The present invention relates to a method and a machine tool for constructing toothed gears, and toothed components in general, which are provided with an external toothing and a grooved internal profile.

In the context of the technical field of mechanical processing, there have been developed a large number of solutions for constructing toothed gears and, more generally, components which can be obtained by means of processing operations with relative rotation between the workpiece and tool.

One of the most critical aspects in this field relates to the possibility of obtaining a good compromise between processing speed and precision without any need for using complex and expensive machine tools.

In particular, it is particularly complex to ensure a high level of concentricity between the internal profile of the component and the external toothing.

In fact, such processing operations are typically carried out on two different machines, initially arranging the workpiece on a gear cutter for constructing the toothing and subsequently on a milling cutter, broaching machine or slotting machine in order to obtain the internal processing, or vice versa.

Therefore, it is evident that the machine change constitutes a critical phase during which the assembly or disassembly of the workpiece may involve errors of positioning and consequently processing defects, unless additional steps with expensive arrangements which are capable of ensuring compliance with the positional tolerances required are carried out.

In order to obtain one or more processing operations at the same time on a single workpiece or on a plurality of workpieces, there have been developed multi-mandrel machines, in particular in which there is used a rotating table, by means of the rotation of which the workpiece can be positioned at a specific work station.

Examples of such machines are described in US 6,000,305 in DE 19916212 A or in DE 10 2012 012559.

In this context, however, there has been found a need to provide for the person skilled in the art a machine which is specifically suitable for constructing cylindrical components which have external toothing and which are provided with internal grooved elements or other processing operations, such as, for example, the processing operations described in DE 10 2015 120556, but which ensures a high level of productivity.

Therefore, the problem addressed by the present invention is to provide a method and an apparatus for constructing toothed gears and toothed components in general, which are provided with an external toothing and an internal grooved profile, which are structurally and functionally configured to at least partially overcome one or more of the disadvantages which are set out with reference to the cited prior art.

In the context of the above-mentioned problem, an object of the present invention is to provide a method and an apparatus for constructing toothed gears which are provided with an external toothing and an internal grooved profile which ensures a high precision and, at the same time, a high level of productivity.

Another object of the present invention is to provide a method and an apparatus for constructing toothed gears which are provided with an external toothing and an internal grooved profile in which it is possible to limit the processing errors as a result of the positioning of the workpiece.

Another object of the present invention is to provide a method and an apparatus for constructing toothed gears which are provided with an external toothing and an internal grooved profile which allows a reduction of the processing costs of this type of component.

This problem is solved and these objects are at least partially achieved by the invention by means of a method and an apparatus for constructing toothed gears which are provided with an external toothing and an internal grooved profile according to one or more of the appended claims.

It will be appreciated that the machine tool and the method according to the present invention allow components which are provided with an external toothing and an internal grooved profile to be processed by always maintaining the workpiece being processed in engagement with a relevant mandrel type engagement device, thereby avoiding any need for transferring the workpiece from one machine to another, and consequently eliminating the cost of the transfer step.

In this manner, there is obtained a benefit in terms of the precision of processing which is therefore capable of achieving the stringent tolerances in the case in which a high level of dimensional precision is required.

Those benefits are therefore obtained using a machine with operating costs which are relatively limited and which is simple from the construction point of view.

The characteristics and advantages of the invention will be appreciated more clearly from the detailed description of a number of embodiments thereof which are illustrated by way of non-limiting example with reference to the appended drawings, in which:
- Figure 1 is a plan view of the machine tool according to the present invention;
- Figure 2 is a front view of a component which is obtained by means of the method according to the present invention;
- Figure 3 is a schematic illustration which illustrates details of the machine tool according to the present invention, some of which are depicted in accordance with a radial section;
- Figures 4A and 4B are a side view and a front view of a toothing tool of the machine tool according to the present invention, respectively;
- Figures 5A and 5B are a side view and a front view of a milling tool of the machine tool according to the present invention, respectively; and
- Figure 6 is a schematic view of a processing step of the method according to the present invention.

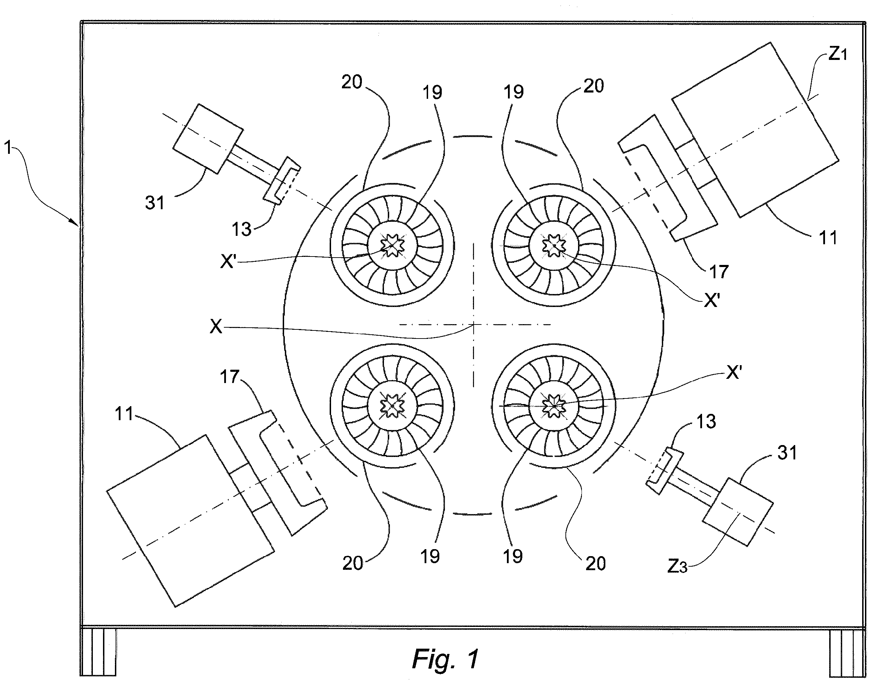

Initially with reference to Figure 1, a machine tool according to the present invention is generally designated 1.

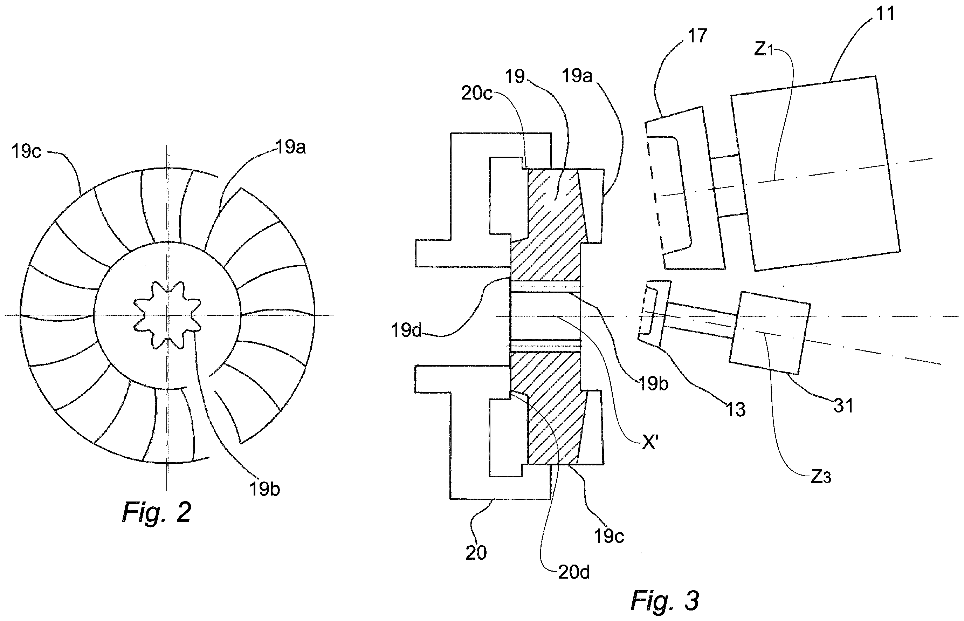

The machine tool 1 of the present invention is intended to manufacture components which are provided with external toothing 19a and a grooved internal profile 19b, as schematically illustrated in Figure 2.

In a preferred embodiment, the teeth of the toothing 19a have a radial development while the internal profile is of the helicoidal type.

As will be described in greater detail below, the components are preferably constructed from semi-finished workpieces 19 of a cylindrical shape which defines a relative axis of axial symmetry of the semi-finished workpiece 19 which is coincident with that of the finished component.

The toothing 19a is preferably constructed at an external face of the semi-finished workpiece 19 while the profile 19b is constructed at an internal portion which is concentric with the axis of axial symmetry mentioned above.

With reference now to Figure 1, the machine tool 1 comprises a rotating table 2 which is rotatable about a main rotation axis X, on which there can be arranged a plurality of semi-finished workpieces 19 which are intended to be processed according to methods which will be described below.

The workpieces 19 are rotatably supported on the rotating table 2 by means of suitable mandrel type engagement devices 20.

The engagement devices 20 are preferably constructed in such a manner that the workpieces 19 are gripped with the axis of axial symmetry thereof in alignment with the rotation axis of the engagement devices 20, which is also defined below as the secondary rotation axis X' in contrast to the rotation axis X of the table itself. According to an aspect of the invention, this secondary rotation axis X' is parallel with the main axis X.

According to preferred embodiments, the engagement devices 20 comprise self-centring elements 20c which are configured to abut a lateral external surface 19c of the semi-finished workpiece 19. The self-centring elements 20c which are, for example, formed by arms which can be moved radially in a coordinated manner, allow positioning of the workpiece 19 in a concentric manner with respect to the engagement device 20.

According to another aspect, the engagement devices 20 comprise a support surface 20d which is configured so as to receive in a supporting manner a rear planar surface 19d of the semi-finished workpiece 19.

In this manner, it is possible to position the workpiece 19 with the relevant axis of axial symmetry parallel with the rotation axis X' of the device 20.

Therefore, it is evident that the combination of the two above-mentioned characteristics can allow precise positioning of the workpiece 19 on the machine tool.

According to a preferred embodiment, the engagement devices 20 are arranged on the rotating table 2 with the respective rotation axes X' arranged, in a mutually equidistant manner, over a circumference with a centre located on the main axis X. In the embodiment illustrated in Figure 1, there are provided (merely by way of example) four engagement devices 20, each one arranged at an angle of 90° with respect to the adjacent ones.

The processing of the workpiece 19 is obtained by means of a plurality of toothing heads 11 and a plurality of milling heads 31. According to the invention the toothing heads 11 are intended to construct the toothing 19a on the workpiece 19 while the milling heads 31 are intended for processing the internal grooved profile 19b.

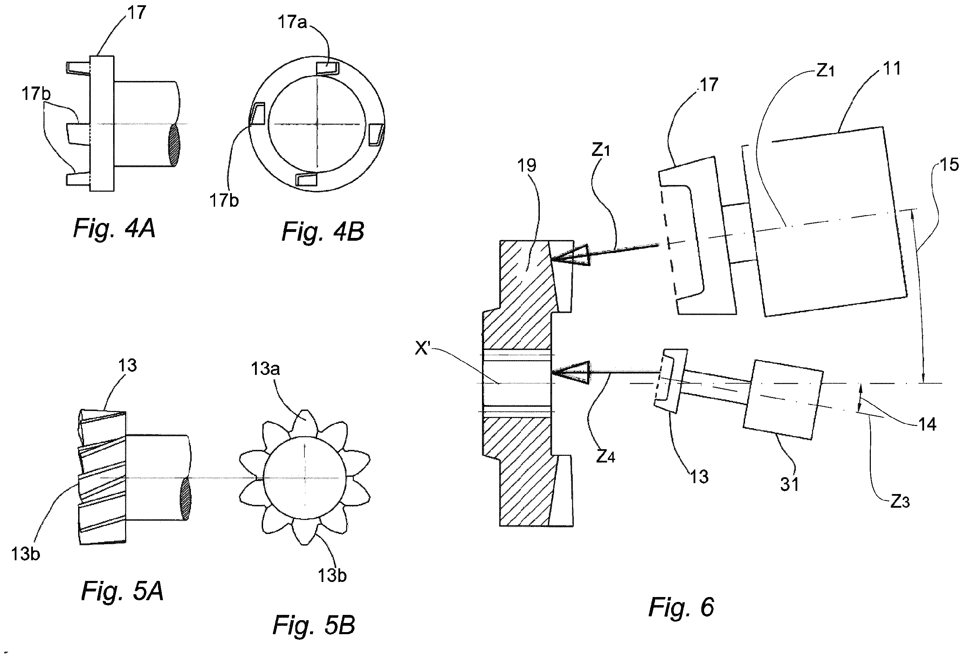

In preferred embodiments, each toothing head 11 has a toothing tool 17 which is rotatable about a work axis Z1, which is illustrated schematically in Figures 4A and 4B. For example, the hobbing tool 17 may comprise one or more teeth 17a, each provided with a respective cutting edge 17b in order to obtain the processing involving removal of material required. This tool may allow the construction of the toothing 19a by means of various types of processing operation, as will be illustrated below.

The milling head 31 may comprise a cutting tool 13 with multiple teeth 13a, each one provided with a relevant cutting edge 13b. For example, the cutting tool 13 may be a tool for processing of the skiving type.

In a preferred, though non-limiting embodiment with regard to the concept set out in the present invention, the total number of toothing heads 11 and milling heads 31 is equal to the total number of engagement devices 20. Furthermore, the toothing heads 11 and the milling heads 31 are arranged so as to be able to carry out processing operations on a workpiece 19 which is arranged on a respective engagement device 20. In other words, there is combined with each engagement device a single head, that is to say, either a milling head or a toothing head.

Therefore, the arrangement of the heads on the machine tool is such that a toothing head 11 alternates with a milling head 31.

With reference to the example of Figure 1, this feature allows, on the one hand, two workpieces to be processed simultaneously and, on the other hand, the two processing operations required to be carried out in successive steps, thereby optimizing the productivity of the process.

As can now be observed in the example illustrated in Figure 3, the toothing heads 11 and the milling heads 31 are movable towards/away from the semi-finished workpiece 19 along a respective axis. Preferably, the movement of the toothing heads 11 may be carried out about the rotation axis Z1 itself of the tool 17 while the milling heads move along a respective translational movement axis Z4, which is preferably parallel with X'.

Typically, the rotation axis Z1 of the toothing unit 11 is inclined at an angle 15 which is relatively small, for example, between 0° and 40°, with respect to the secondary rotation axis X'.

According to another aspect, the rotation axis Z3 of the milling unit 31 is inclined by an angle 14 which is relatively small, for example, between 0° and 30°, with respect to the secondary rotation axis X'.

The processing of the workpieces 19 by means of the machine tool of the present invention is therefore described below.

Generally, the method according to the present invention provides for processing by removal of material on the workpiece 19 in order to obtain the radial toothing 19a on the surface of the external face of the workpiece and the grooved profile 19b on an internal portion thereof.

As indicated above, the radial toothing 19a and the grooved profile 19b both extend about the axis of axial symmetry of the cylinder which forms the workpiece 19.

The workpieces 19 which are still coarse, that is to say, in the semi-finished cylindrical form, are initially arranged on each engagement device 20.

Each workpiece 19 is arranged/supported with a rear external face 19d thereof, opposite the face on which the toothing 19a will be constructed, in abutment with the surface 20d of the device 20.

Subsequently, the self-centring elements 20c are mutually moved together so as to enclose the workpiece 19 at the external lateral surface 19c thereof.

It may be appreciated that the surfaces 19c and 19d define reference surfaces for all the processing operations which will be carried out by means of the machine tool 1.

Once the workpieces are positioned on the engagement devices 20, the process starts by carrying out a first processing operation.

In accordance with the position at which the workpiece 19 is positioned, the processing involving toothing or processing involving milling will first be carried out.

At the end of each processing operation, the workpieces 19 are rotated by means of the table 2 in order to be brought to the adjacent station in order to carry out the missing processing operation.

Consequently, in the machine tool of the present invention it is unnecessary to disassemble the workpiece in order to complete the processing required, unlike in the known solutions of the current prior art.

Now examining the processing operations in detail, as emphasised above, the processing involving milling is carried out by means of the milling head 31 which operates on the workpiece 19 in order to obtain the internal grooved profile 19b.

Preferably, during this processing operation both the workpiece 19 and the tool 13 are rotated at high speed so as to simulate a connection movement between the teeth 13a of the tool 13 and the teeth which define the internal grooved profile 19b.

Advantageously, this relative movement allows a profile with an involute to be obtained.

Preferably, the rotation of the workpiece 19 and tool 13 is further combined with a translational movement of the milling head 31 towards the workpiece 19 itself so as to obtain a progressive movement together and the removal of material in order to form the internal grooved profile 19b.

According to a preferred embodiment, the milling head 31 moves towards/away from the workpiece 19 along the axis Z4 which is parallel with the axis X' itself of the finished groove 19b.

In some embodiments, the construction of the profile 19b is complete when the tool has completely passed through the workpiece 19.

At the end of the processing of the groove 19b, the tool is moved away and the workpiece is moved to the subsequent station or discharged if both the processing operations have already been completed.

With regard instead to the toothing operation, this can be carried out substantially according to three different methods.

In a first case, the processing takes place using a tool 17 which is provided with a plurality of teeth 17a and which is rotated at high speed by maintaining the workpiece 19 in an unchanged state, at least with regard to the rotation about the axis X'.

Meanwhile, the head 11 is advanced along the axis Z1 until a space is completely processed between two teeth (also referred to as a gap) of the external toothing 19a.

Then, the tool is retracted by means of a movement of the head 11 away so as to release the workpiece and to allow the rotation thereof about the axis X'.

The workpiece 19 is then rotated about the axis X' through an angle so that a subsequent space can be obtained in a manner which is conceptually similar to the one described above.

This operation is then repeated for all the times necessary in order to obtain the complete construction of the toothing 19a.

For example, if there are present twenty teeth in the toothing 19a, the passage of the tool 17 will be repeated at least 20 times until the toothing 19a is completely constructed. At this point, the head 11 can be retracted in order to allow the removal of the workpiece 19 if the processing is finished, or the movement to the subsequent processing station. The above-described system is also called "forming vane by vane" because it provides for the single formation of the spaces between successive teeth of the toothing 19a.

In a second alternative, the processing of the toothing can be carried out by using a tool 17 which is similar to the preceding case, but in this case the tool 17 while rotating about the rotation axis Z1 carries out limited rotational movements, preferably over angles less than 180°, about a conical surface of the toothing 19a or about an axis which is incident to the rotation axis X'.

The toothing head 11 is further advanced slowly along the axis Z1 in order to move into contact with the workpiece 19 and to carry out the removal of material.

The combination between the advance movement of the tool 17, the rotation thereof about the axis Z1 and the slow rotation of the tool 17 about a conical surface of the toothing 19a or rotation about an axis which is incident to the axis X' allows the generation of the spaces between the teeth rather than a formation as carried out for the preceding case. Consequently, this processing is also defined as "generating vane by vane".

Similarly to the preceding case, the process is repeated all the times necessary in order to obtain the complete toothing 19a of the workpiece 19.

In a third solution, the workpiece 19 is also rotated at high speed about the axis of axial symmetry thereof, that is to say, about the axis X'.

The rotation of the tool 17 can further be combined with a movement of slow rotation of the tool 17 about a conical surface of the toothing 19a or rotation about an axis which is incident to the axis X'. In a manner which is conceptually similar to the preceding case, the magnitude of the rotation is limited, preferably less than 180°.

The tool 17 is also rotated and caused to advance to the workpiece 19 by means of a translational movement along the axis Z1.

This type of processing allows the production of all the teeth of the toothing 19a in a simultaneous manner, therefore without acting on single spaces which separate each pair of teeth.

The processing of the toothing 19a is therefore obtained by means of coupling/generation between the teeth 17a of the tool and the surface of the workpiece 19, simulating a connection between teeth of two toothed gears.

Therefore, it will be appreciated that the machine tool according to the present invention allows the simultaneous processing of a plurality of workpieces to be obtained, one group of workpieces being processed by means of the milling head and another group by means of the toothing head.

The mutual position of the teeth can therefore be transposed, thereby obtaining the complete processing of the workpieces.

Therefore, the invention solves the problem set out, achieving at the same time a plurality of advantages including the possibility of obtaining processing of components which are provided with toothing arrangements and grooved profiles by means of a single machine, therefore without any need for moving the workpiece being processed with respect to the engagement device on which it is mounted.

The method according to the present invention further allows an improvement of the productivity with respect to the known processes because it allows the construction of a high number of workpieces without requiring complex and expensive apparatuses.

## Claims

1. A machine tool (1) for manufacturing toothed gears and components which are provided with external toothing and a grooved internal profile comprising a rotating table (2) which can rotate about a main rotation axis (X) and a plurality of toothing heads (11) which are capable of carrying out a toothing processing operation on a workpiece (19) which is supported on the rotating table (2) and a plurality of milling heads (31) which are capable of carrying out an internal milling processing operation on the workpiece (19), each of the toothing heads (11) being arranged in alternation with a respective milling head (31) of the plurality along the perimeter of the rotating table (2), wherein the toothing heads (11) are intended to construct the external toothing on the workpieces (19) while the milling heads (31) are intended for processing the internal grooved profile on the workpieces (19), the workpieces (19) being rotatably supported on the rotating table (2) by means of mandrel type engagement devices (20), the mandrel type engagement devices (20) being rotatable about a secondary rotation axis (X') parallel with the main axis (X) and being configured in such a manner that the workpieces (19) are gripped by the mandrel type engagement devices (20) with an axis of axial symmetry of the workpieces (19) being aligned with the secondary rotation axis (X').

2. A machine tool (1) according to claim 1, wherein the mandrel type engagement devices (20) comprise a plurality of self-centring elements (20c) which are configured to abut a lateral external surface (19c) of the semi-finished workpiece (19) and a support surface (20d) which is configured so as to receive in a supporting manner a rear planar surface (19d) of the semi-finished workpiece (19).

3. A machine tool (1) according to either of the preceding claims, wherein the toothing units (11) and the milling units (31) are movable towards/away from the semi-finished workpiece (19) along a respective axis (Z1, Z4).

4. A machine tool (1) according to any one of the preceding claims, wherein the rotation axis (Z1) of the toothing units (11) is inclined by an angle (15) between 0° and 40° with respect to the secondary rotation axis (X').

5. A machine tool (1) according to any one of the preceding claims, wherein the rotation axis (Z3) of the milling unit (31) is inclined by an angle (14) between 0° and 30° with respect to the secondary rotation axis (X').

6. A machine tool (1) according to any one of the preceding claims, wherein the total number of toothing heads (11) and milling heads (31) is equal to the total number of engagement devices (20).

7. A method for constructing toothed gears and components which are provided with external toothing and a grooved internal profile , the method being performed by means of a machine tool (1) according to any one of the preceding claims and comprising, starting from cylindrical semi-finished workpieces:
▪ positioning a plurality of semi-finished workpieces on the mandrel type engagement devices (20) in such a manner that the axis of axial symmetry of the semi-finished workpieces is aligned with the secondary rotation axis (X');
▪ carrying out the milling of the internal grooved profile (19b) on at least one of the semi-finished workpieces by simultaneously rotating the semi-finished workpiece (19) by means of the mandrel type engagement device (20) and the milling unit (11) and simultaneously bringing about an advance of a tool (13) of the milling head (31) along a translation axis (Z4);
▪ carrying out the external toothing (19a) on at least one of the semi-finished workpieces by rotating the toothing unit (11) and moving the toothing unit (11) towards the semi-finished workpiece;
▪ rotating the semi-finished workpieces about the main rotation axis (X) by maintaining the semi-finished workpieces (19) in engagement with the mandrel type engagement devices (20) until the workpiece (19) is positioned in the region of a successive milling unit (31) or toothing unit (11).

8. A method according to claim 7, wherein the milling and the toothing are carried out in successive steps on the semi-finished workpiece (19).

9. A method according to claim 7 or claim 8, wherein the milling and the toothing are carried out simultaneously on two different semi-finished workpieces (19).

10. A method according to any one of claims 7 to 9, wherein the milling is carried out by moving the milling head (31) towards the semi-finished workpiece (19) being processed.

11. A method according to any one of claims 7 to 10, wherein the toothing is carried out by simultaneously rotating the semi-finished workpiece (19) and the toothing head (11).

12. A method according to claim 11, wherein the toothing comprises additional limited rotations, preferably over an angle less than 180°, of the tool (17) about a rotation axis which is not parallel with the secondary rotation axis (X') at a speed less than the rotation speed about the work axis (Z1) .

13. A method according to any one of claims 7 to 12, wherein the semi-finished workpieces are positioned on the mandrel type engagement devices (20) by supporting an external rear face (19d) of the workpiece (19) on a support surface (20d) of the mandrel type engagement device (20) and moving self-centring elements (20c) in the direction of the secondary rotation axis (X').

## Patentansprüche

1. Werkzeugmaschine (1) zur Herstellung von Zahnrädern und Bauteilen, die mit einer Außenverzahnung und einem Innennutprofil versehen sind, mit einem Drehtisch (2), der um eine Hauptdrehachse (X) drehbar ist, und einer Vielzahl von Verzahnungsköpfen (11), die in der Lage sind, einen Verzahnungsbearbeitungsvorgang an einem Werkstück (19) auszuführen, das auf dem Drehtisch (2) abgestützt ist, und einer Vielzahl von Fräsköpfen (31), die in der Lage sind, einen Innenfräsbearbeitungsvorgang am Werkstück (19) auszuführen, wobei jeder der Verzahnungsköpfe (11) abwechselnd mit einem jeweiligen Fräskopf (31) der Vielzahl entlang des Umfangs des Drehtisches (2) angeordnet ist, wobei die Verzahnungsköpfe (11) zum Ausbilden der Außenverzahnung an den Werkstücken (19) bestimmt sind, während die Fräsköpfe (31) zum Bearbeiten des Innennutprofils an den Werkstücken (19) bestimmt sind, wobei die Werkstücke (19) mittels dornartiger Eingriffsvorrichtungen (20) auf dem Drehtisch (2) drehbar abgestützt sind, wobei die dornartigen Eingriffsvorrichtungen (20) um eine zur Hauptachse (X) parallele sekundäre Drehachse (X') drehbar sind und so konfiguriert sind, dass die Werkstücke (19) von den dornartigen Eingriffsvorrichtungen (20) gegriffen werden, wobei eine axiale Symmetrieachse der Werkstücke (19) mit der sekundären Drehachse (X') fluchtet.

2. Werkzeugmaschine (1) nach Anspruch 1, wobei die dornartigen Eingriffsvorrichtungen (20) eine Vielzahl von selbstzentrierenden Elementen (20c), die so konfiguriert sind, dass diese an einer seitlichen Außenfläche (19c) des halbfertigen Werkstücks (19) anliegen, und eine Auflagefläche (20d) umfassen, die so konfiguriert ist, dass diese eine plane Rückseite (19d) des halbfertigen Werkstücks (19) abstützend aufnimmt.

3. Werkzeugmaschine (1) nach einem der vorhergehenden Ansprüche, wobei die Verzahnungseinheiten (11) und die Fräseinheiten (31) entlang einer jeweiligen Achse (Z1, Z4) zum halbfertigen Werkstück (19) hin/von diesem weg bewegbar sind.

4. Werkzeugmaschine (1) nach einem der vorhergehenden Ansprüche, wobei die Drehachse (21) der Verzahnungseinheiten (11) um einen Winkel (15) zwischen 0° und 40° gegenüber der sekundären Drehachse (X') geneigt ist.

5. Werkzeugmaschine (1) nach einem der vorhergehenden Ansprüche, wobei die Drehachse (Z3) der Fräseinheit (31) um einen Winkel (14) zwischen 0° und 30° gegenüber der sekundären Drehachse (X') geneigt ist.

6. Werkzeugmaschine (1) nach einem der vorhergehenden Ansprüche, wobei die Gesamtzahl der Verzahnungsköpfe (11) und Fräsköpfe (31) der Gesamtzahl der Eingriffseinrichtungen (20) entspricht.

7. Verfahren zum Herstellen von Zahnrädern und Bauteilen, die mit einer Außenverzahnung und einem Innennutprofil versehen sind, wobei das Verfahren mittels einer Werkzeugmaschine (1) nach einem der vorhergehenden Ansprüche durchgeführt wird und ausgehend von zylindrischen Halbzeugen folgende Schritte umfasst:
• Positionieren einer Vielzahl von halbfertigen Werkstücken auf den dornartigen Eingriffsvorrichtungen (20) derart, dass die axiale Symmetrieachse der halbfertigen Werkstücke mit der sekundären Drehachse (X') fluchtet;
• Ausführen des Fräsens des Innennutprofils (19b) an zumindest einem der halbfertigen Werkstücke durch gleichzeitiges Drehen des halbfertigen Werkstücks (19) mittels der dornartigen Eingriffsvorrichtung (20) und der Fräseinheit (11), und gleichzeitiges Bewirken eines Vorschubs eines Werkzeugs (13) des Fräskopfs (31) entlang einer Translationsachse (Z4);
• Ausführen der Außenverzahnung (19a) an zumindest einem der halbfertigen Werkstücke durch Drehen der Verzahnungseinheit (11) und Bewegen der Verzahnungseinheit (11) in Richtung des halbfertigen Werkstücks;
• Drehen der halbfertigen Werkstücke um die Hauptdrehachse (X) durch Beibehalten des Eingriffs der halbfertigen Werkstücke (19) mit den dornartigen Eingriffsvorrichtungen (20), bis das Werkstück (19) im Bereich einer nachfolgenden Fräseinheit (31) oder Verzahnungseinheit (11) positioniert ist.

8. Verfahren nach Anspruch 7, wobei das Fräsen und das Verzahnen in aufeinanderfolgenden Schritten am halbfertigen Werkstück (19) durchgeführt werden.

9. Verfahren nach Anspruch 7 oder 8, wobei das Fräsen und das Verzahnen gleichzeitig an zwei verschiedenen halbfertigen Werkstücken (19) durchgeführt werden.

10. Verfahren nach einem der Ansprüche 7 bis 9, wobei das Fräsen durch Bewegen des Fräskopfes (31) in Richtung auf das zu bearbeitende halbfertige Werkstück (19) durchgeführt wird.

11. Verfahren nach einem der Ansprüche 7 bis 10, wobei das Verzahnen durch gleichzeitiges Drehen des halbfertigen Werkstücks (19) und des Verzahnungskopfes (11) durchgeführt wird.

12. Verfahren nach Anspruch 11, wobei das Verzahnen zusätzliche begrenzte Drehungen, vorzugsweise über einen Winkel von weniger als 180°, des Werkzeugs (17) um eine Drehachse, die nicht parallel zur sekundären Drehachse (X') verläuft, mit einer Geschwindigkeit umfasst, die geringer als die Drehgeschwindigkeit um die Arbeitsachse (Z1) ist.

13. Verfahren nach einem der Ansprüche 7 bis 12, wobei die halbfertigen Werkstücke auf den dornartigen Eingriffsvorrichtungen (20) dadurch positioniert werden, dass eine äußere Rückseite (19d) des Werkstücks (19) auf einer Auflagefläche (20d) der dornartigen Eingriffsvorrichtung (20) abgestützt wird und selbstzentrierende Elemente (20c) in Richtung der sekundären Drehachse (X') bewegt werden.

## Revendications

1. Machine-outil (1) pour la fabrication d'engrenages dentés et de composants qui sont dotés d'une denture externe et d'un profil interne rainuré comprenant une table tournante (2) qui peut tourner autour d'un axe de rotation principal (X) et une pluralité de têtes de denture (11) qui sont aptes à mettre en oeuvre une opération de traitement de denture sur une pièce (19) qui est supportée sur la table tournante (2) et une pluralité de têtes de fraisage (31) qui sont aptes à mettre en oeuvre une opération de traitement de fraisage interne sur la pièce (19), chacune des têtes de denture (11) étant agencée en alternance avec une tête de fraisage respective (31) de la pluralité le long du périmètre de la table tournante (2), dans laquelle les têtes de denture (11) sont conçues pour construire la denture externe sur les pièces (19) alors que les têtes de fraisage (31) sont conçues pour traiter le profil rainuré interne sur les pièces (19), les pièces (19) étant supportées en rotation sur la table tournante (2) au moyen de dispositifs de mise en prise du type mandrin (20), les dispositifs de mise en prise du type mandrin (20) étant rotatifs autour d'un axe de rotation secondaire (X') parallèle à l'axe principal (X) et étant configurés de sorte que les pièces (19) sont saisies par les dispositifs de mise en prise du type mandrin (20) avec un axe de symétrie axiale des pièces (19) qui est aligné avec l'axe de rotation secondaire (X').

2. Machine-outil (1) selon la revendication 1, dans laquelle les dispositifs de mise en prise du type mandrin (20) comprennent une pluralité d'éléments à centrage automatique (20c) qui sont configurés pour venir buter contre une surface externe latérale (19c) de la pièce semi-finie (19) et une surface de support (20d) qui est configurée de manière à recevoir dans un mode de support une surface plane arrière (19d) de la pièce semi-finie (19).

3. Machine-outil (1) selon l'une ou l'autre des revendications précédentes, dans laquelle les unités de denture (11) et les unités de fraisage (31) sont mobiles vers/depuis la pièce semi-finie (19) le long d'un axe respectif (Z1, Z4).

4. Machine-outil (1) selon l'une quelconque des revendications précédentes, dans laquelle l'axe de rotation (Z1) des unités de denture (11) est incliné d'un angle (15) entre 0° et 40° par rapport à l'axe de rotation secondaire (X').

5. Machine-outil (1) selon l'une quelconque des revendications précédentes, dans laquelle l'axe de rotation (Z3) de l'unité de fraisage (31) est incliné d'un angle (14) entre 0° et 30° par rapport à l'axe de rotation secondaire (X').

6. Machine-outil (1) selon l'une quelconque des revendications précédentes, dans laquelle le nombre total de têtes de denture (11) et de têtes de fraisage (31) est égal au nombre total de dispositifs de mise en prise (20).

7. Procédé de construction d'engrenages dentés et de composants qui sont dotés d'une denture externe et d'un profil interne rainuré, le procédé étant réalisé au moyen d'une machine-outil (1) selon l'une quelconque des revendications précédentes et comprenant, à partir de pièces semi-finies cylindriques :
▪ le positionnement d'une pluralité de pièces semi-finies sur les dispositifs de mise en prise du type mandrin (20) de sorte que l'axe de symétrie axiale des pièces semi-finies soit aligné avec l'axe de rotation secondaire (X') ;
▪ la mise en oeuvre du fraisage du profil rainuré interne (19b) sur au moins une des pièces semi-finies par rotation simultanée de la pièce semi-finie (19) au moyen du dispositif de mise en prise du type mandrin (20) et de l'unité de fraisage (11) et l'avancée simultanée d'un outil (13) de la tête de fraisage (31) le long d'un axe de translation (Z4) ;
▪ la mise en oeuvre de la denture externe (19a) sur au moins une des pièces semi-finies par rotation de l'unité de denture (11) et déplacement de l'unité de denture (11) en direction de la pièce semi-finie ;
▪ la rotation des pièces semi-finies autour de l'axe de rotation principal (X) en maintenant les pièces semi-finies (19) en prise avec les dispositifs de mise en prise du type mandrin (20) jusqu'à ce que la pièce (19) soit positionnée dans la région d'une unité de fraisage (31) ou d'unité de denture (11) successive.

8. Procédé selon la revendication 7, dans lequel le fraisage et la denture sont mis en oeuvre dans des étapes successives sur la pièce semi-finie (19).

9. Procédé selon la revendication 7 ou 8, dans lequel le fraisage et la denture sont mis en oeuvre simultanément sur deux pièces semi-finies (19) différentes.

10. Procédé selon l'une quelconque des revendications 7 à 9, dans lequel le fraisage est mis en oeuvre en déplaçant la tête de fraisage (31) en direction de la pièce semi-finie (19) en cours de traitement.

11. Procédé selon l'une quelconque des revendications 7 à 10, dans lequel la denture est mise en oeuvre par rotation simultanée de la pièce semi-finie (19) et de la tête de denture (11).

12. Procédé selon la revendication 11, dans lequel la denture comprend des rotations limitées supplémentaires, de préférence sur un angle inférieur à 180°, de l'outil (17) autour d'un axe de rotation qui n'est pas parallèle à l'axe de rotation secondaire (X') à une vitesse inférieure à la vitesse de rotation autour de l'axe de travail (Z1).

13. Procédé selon l'une quelconque des revendications 7 à 12, dans lequel les pièces semi-finies sont positionnées sur les dispositifs de mise en prise du type mandrin (20) en supportant une face arrière externe (19d) sur la pièce (19) sur une surface de support (20d) du dispositif de mise en prise du type mandrin (20) et en déplaçant les éléments à centrage automatique (20c) dans la direction de l'axe de rotation secondaire (X').
